# EUROPEAN PATENT APPLICATION

(11) **EP 4 510 358 A1**
(43) Date of publication of application: **19.02.2025**
(21) Application number: 22960334.5
(22) Date of filing: 30.09.2022
(51) Int. Cl.: H01M 50/463

(54) **SEPARATOR, SECONDARY BATTERY, AND ELECTRICAL APPARATUS**

(71) Applicant: Contemporary Amperex Technology Co., Limited, Ningde, Fujian 352100 (CN)
(72) Inventor: CHAI, Zhisheng, Ningde, Fujian 352100 (CN); LIU, Zhi, Ningde, Fujian 352100 (CN); CHI, Qingkui, Ningde, Fujian 352100 (CN); JIN, Haizu, Ningde, Fujian 352100 (CN)
(74) Representative: Ran, Handong
(86) International application number: PCT/CN2022/123361
(87) International publication number: WO 2024/065715

(57) **Abstract**

The present application relates to a separator. The separator comprises a base film and a coating arranged on the surface of at least one side of the base film. The coating comprises a central region arranged in the length direction of the base film and using the center line in the width direction of the base film as the center line, and an edge region arranged outside the central region. The central region comprises a region A of which the coating thickness is D1, the edge region comprises a first region of which the thickness is D0, and D1<D0. The present application also relates to a corresponding secondary battery and an electrical apparatus. The separator has a good capability to retain an electrolyte, so that the corresponding battery cycle performance is improved.

## Description

### TECHNICAL FIELD

This application relates to the technical field of secondary batteries, and in particular, to a separator, a secondary battery and an electrical device.

### BACKGROUND

In recent years, as the application range of secondary batteries becomes more and more extensive, the secondary batteries are widely applied to energy storage power supply systems such as hydraulic, thermal, wind and solar power plants, as well as fields of electric tools, electric bicycles, electric motorcycles, electric vehicles, military equipment, aerospace, and the like. Because of the great development of the secondary batteries, higher requirements have been put forward for their energy densities, cycle performance, and the like. A battery with excellent performance has a very high requirement for a separator, such as superior ion transport and electrolytic solution retention abilities, good mechanical performance, and the ability to remain chemically inactive in a battery system.

As the energy density of a single battery gets higher and higher, the space inside the battery gets smaller and smaller, which puts a tougher demand on the separator. Therefore, the search for the separator with more excellent performance is one of the directions on which a person skilled in the art is focusing.

### SUMMARY

This application is performed in view of the foregoing problems. One of the objectives of this application is to provide a separator. The separator is provided with a coating of a specific structure, which enhances the ability of the separator to retain an electrolytic solution, thereby improving corresponding battery cycle performance.

In order to achieve the foregoing objective, a first aspect of this application provides a separator. The separator includes a base film and a coating disposed on a surface of at least one side of the base film. The coating includes a central region disposed in a length direction of the base film with a center line of the base film in a width direction as a center line, and an edge region disposed outside the central region. The central region includes a region A having a coating thickness of D1, the edge region includes a first region having a thickness of D0, where D1 < D0.

According to the separator of this application, the edge region includes the first region having the greater thickness than the region A, which ensures that the separator can relieve a swelling force inside a battery cell, thus enhancing the ability of the electrolytic solution of the separator to retain the electrolytic solution, thereby improving the corresponding battery cycle performance.

In an optional implementation, a ratio of D1 to D0 ranges from 0.1 to 0.7. Thus, the ability of the electrolytic solution of the separator to retain the electrolytic solution is further enhanced, thereby improving the corresponding battery cycle performance.

In an optional implementation, in the central region, the region A has an area percentage ranging from 70% to 100%, based on an area of the central region. Thus, the ability of the electrolytic solution of the separator to retain the electrolytic solution is further enhanced, thereby improving the corresponding battery cycle performance.

In an optional implementation, the central region is composed of the region A. Thus, the ability of the electrolytic solution of the separator to retain the electrolytic solution is further enhanced, thereby improving the corresponding battery cycle performance.

In an optional implementation, the central region has a coating area percentage ranging from 10% to 70%, based on an area of the coating. Thus, the ability of the electrolytic solution of the separator to retain the electrolytic solution is further enhanced, thereby improving the corresponding battery cycle performance.

In an optional implementation, the edge region has a coating area percentage ranging from 30% to 90%, based on the area of the coating. Thus, the ability of the electrolytic solution of the separator to retain the electrolytic solution is further enhanced, thereby improving the corresponding battery cycle performance.

In an optional implementation, the first region has a coating area accounting for 30% to 100% of the edge region. Thus, the ability of the electrolytic solution of the separator to retain the electrolytic solution is further enhanced, thereby improving the corresponding battery cycle performance.

In an optional implementation, the edge region includes a first region having a thickness of D0 and a second region having a thickness of less than D0, where the thickness of the second region is the same as or different from the thickness of the region A. Thus, the ability of the electrolytic solution of the separator to retain the electrolytic solution is further enhanced, thereby improving the corresponding battery cycle performance.

In an optional implementation, the thickness of the second region is the same as the thickness of the region A. Thus, the ability of the electrolytic solution of the separator to retain the electrolytic solution is further enhanced, thereby improving the corresponding battery cycle performance.

In an optional implementation, in a case that the thickness of the second region is different from the thickness of the region A, the thickness of the second region is greater than the thickness of the region A. Thus, the ability of the electrolytic solution of the separator to retain the electrolytic solution is further enhanced, thereby improving the corresponding battery cycle performance.

In an optional implementation, in the edge region, the first region and the second region are alternated into a strip shape, and a strip-shaped long edge is disposed parallel to a width direction of the separator. Thus, the ability of the electrolytic solution of the separator to retain the electrolytic solution is further enhanced, thereby improving the corresponding battery cycle performance.

In an optional implementation, the coating includes at least one of an inorganic particle, an organic particle and a binder. Thus, the ability of the electrolytic solution of the separator to retain the electrolytic solution is further enhanced, thereby improving the corresponding battery cycle performance.

A second aspect of this application further provides a secondary battery, characterized in that the secondary battery includes the separator according to the first aspect of this application.

Thus, the secondary battery has excellent cycle performance.

A third aspect of this application further provides an electrical device, characterized in that the electrical device includes the secondary battery according to the second aspect of this application.

According to the separator of this application, the edge region includes the first region having the greater thickness than the central region continuously coated in a length direction of the edge region, which ensures the rate of the electrolytic solution being sucked back from and infiltrated into the separator, thus enhancing the ability of the separator to retain the electrolytic solution, thereby improving the corresponding battery cycle performance.

### BRIEF DESCRIPTION OF DRAWINGS

FIG. 1 is a schematic diagram of a separator coating according to an embodiment of this application;
FIG. 2 is a schematic diagram of a separator coating according to a preferable embodiment of this application;
FIG. 3 is a schematic diagram of a separator coating according to a preferable embodiment of this application;
FIG. 4 is a schematic diagram of a separator coating according to a preferable embodiment of this application;
FIG. 5 is a schematic diagram of a separator coating according to Embodiment 10 of this application;
FIG. 6 is a schematic diagram of a secondary battery according to an implementation of this application;
FIG. 7 is an exploded view of the secondary battery according to an implementation of this application shown in FIG. 6; and
FIG. 8 is a schematic diagram of an electrical device using a secondary battery as a power supply according to an implementation of this application.

### Reference numerals in the drawings:

5. Secondary battery; 51. Shell; 52. Electrode assembly; 53. Cover plate; and 6. Electrical device.

### DETAILED DESCRIPTION OF EMBODIMENTS

The following describes in detail and specifically discloses implementations of a separator, a secondary battery and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject matter recited in the claims.

A "range" disclosed in this application is defined in the form of a lower limit and an upper limit. A given range is defined by a lower limit and an upper limit selected. The selected lower and upper limits define boundaries of a particular range. A range so defined may be inclusive or exclusive of end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4 and 5 are listed, the following ranges are all expectable: 1 to 3, 1 to 4, 1 to 5, 2 to 3, 2 to 4, and 2 to 5. Unless otherwise specified in this application, a numerical range "a to b" is a brief representation of any combination of real numbers between a and b inclusive, where both a and b are real numbers. For example, a numerical range "0 to 5" herein means all real numbers listed between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified, any implementations and optional implementations in this application may be combined with each other to form a new technical solution.

Unless otherwise expressly specified, any technical features and optional technical features in this application may be combined with each other to form a new technical solution.

Unless otherwise expressly specified, all steps in this application may be performed in sequence or at random, and preferably in sequence. For example, that the method includes steps (a) and (b) indicates that the method may include steps (a) and (b) performed in sequence, or steps (b) and (a) performed in sequence. For example, the mention that the method may further include step (c) indicates that step (c) may be added into the method in any sequence. For example, the method may include steps (a), (b), and (c), or may include steps (a), (c), and (b), or may include steps (c), (a), and (b), and so on.

Unless otherwise expressly specified, "include" and "comprise" referred to in this application may be open-ended, or close-ended. For example, the "include" and "comprise" may indicate that other components not listed may also be included or comprised, or that only the listed components may be included or comprised.

Unless otherwise expressly specified, in this application, the term "or" is inclusive. For instance, the phrase "A or B" means "A, B, or both A and B". More specifically, any one of the following conditions satisfies the condition "A or B": A is true (or exists) and B is false (or does not exist); A is false (or does not exist) and B is true (or exists); or both A and B are true (or exist).

At present, because of the great development of secondary batteries, higher requirements have been put forward for their energy densities, cycle performance, and the like. A battery with excellent performance has a very high requirement for a separator, such as superior ion transport and electrolytic solution retention abilities, good mechanical performance, and the ability to remain chemically inactive in a battery system. As the energy density of a single battery gets higher and higher, the space inside the battery gets smaller and smaller, which puts a higher requirement for the separator. Therefore, the search for the separator with more excellent performance is one of the directions on which a person skilled in the art is focusing. In charging and discharging processes, negative and positive materials will swell. When a swelling force inside the battery is excessively large, the porosity of the separator will decrease significantly, causing an electrolytic solution to become very difficult to suck back. The inventor has researched and found a separator. The separator is provided with a coating that is thin in the middle and provided with a first region at edges, which can effectively relieve the swelling force in the middle of a battery cell and enhance the ability of the separator to retain the electrolytic solution, thereby improving corresponding battery cycle performance.

In some implementations, a first aspect of this application provides a separator. The separator includes a base film and a coating disposed on a surface of at least one side of the base film. The coating includes a central region disposed in a length direction of the base film with a center line of the base film in a width direction as a center line, and an edge region disposed outside the central region. The central region includes a region A having a thickness of D1, the edge region includes a first region having a thickness of D0, where D1 < D0.

According to the separator of this application, the edge region includes the first region having the greater thickness than the central region continuously coated in a length direction of the edge region, which ensures that the separator can relieve a swelling force inside a battery cell to reduce extrusion of the electrolytic solution in the separator, thus enhancing the ability of the electrolytic solution of the separator to retain the electrolytic solution, thereby improving the corresponding battery cycle performance.

In some implementations, a ratio of D1 to D0 ranges from 0.1 to 0.7, optionally, 0.2 to 0.55, and further optionally, 0.35 to 0.55. Thus, the ability of the electrolytic solution of the separator to retain the electrolytic solution is further enhanced, thereby improving the corresponding battery cycle performance.

In some implementations, D0 ranges from 1 to 5 um, preferably, 2 to 4 um; and D1 ranges from 0.5 to 2.5 um, preferably, 1 to 2 um. The base film has a thickness ranging from 5 to 20 um, preferably, 7 to 16 um.

In some implementations, in the central region, the region A has an area percentage ranging from 70% to 100%, optionally, 90% to 100%, based on an area of the central region. Thus, the ability of the electrolytic solution of the separator to retain the electrolytic solution is further enhanced, thereby improving the corresponding battery cycle performance.

In some implementations, the central region includes a region A, and optionally, a region B. The thickness or composition of the region A may be the same as or different from the thickness or composition of the region B.

In some implementations, the central region is composed of the region A, that is, the central region does not include the region B. Thus, the ability of the electrolytic solution of the separator to retain the electrolytic solution is further enhanced, thereby improving the corresponding battery cycle performance.

In some implementations, the central region has a coating area percentage ranging from 10% to 70%, optionally, 10% to 30%, further optionally, 15% to 25%, based on an area of the coating. Thus, the ability of the electrolytic solution of the separator to retain the electrolytic solution is further enhanced, thereby improving the corresponding battery cycle performance.

In some implementations, the edge region has a coating area percentage ranging from 30% to 90%, optionally, 70% to 90%, further optionally, 75% to 85%, based on the area of the coating. Thus, the ability of the electrolytic solution of the separator to retain the electrolytic solution is further enhanced, thereby improving the corresponding battery cycle performance.

In some implementations, the first region has a coating area accounting for 30% to 100% of the edge region, optionally, 40% to 100%, further optionally, 40% to 60%, even further optionally, 45% to 55%. Thus, the ability of the electrolytic solution of the separator to retain the electrolytic solution is further enhanced, thereby improving the corresponding battery cycle performance.

In some implementations, a boundary line of the central region may be a straight line parallel to an edge of the separator, or may be an irregular curve.

In an implementation, on any one of cross sections of the separator in a width direction, a width ratio of the central region to the edge region ranges from 0.1 to 2.3, preferably, 0.12 to 1; a width of the central region ranges from 8 to 55 mm, preferably, 10 to 35 mm; and a width of the separator ranges from 70 to 300 mm.

In an implementation, on any one of cross sections of the separator in the width direction, a width of an edge region on one side of the central region may be the same as or different from a width of an edge region on the other side of the central region, and a width ratio of the edge region on one side of the central region to the edge region on the other side of the central region ranges from 0.8 to 1.2, preferably, 1; and thicknesses of the two edge regions may be the same or different, preferably, the same.

In some implementations, the edge region includes a first region having a thickness of D0 and a second region having a thickness of less than D0, where the thickness of the second region is the same as or different from the thickness of the region A, preferably, the same. Thus, the ability of the electrolytic solution of the separator to retain the electrolytic solution is further enhanced, thereby improving the corresponding battery cycle performance.

In some implementations, the thickness of the second region is the same as the thickness of the region A. Thus, the ability of the electrolytic solution of the separator to retain the electrolytic solution is further enhanced, thereby improving the corresponding battery cycle performance.

In some implementations, in a case that the thickness of the second region is different from the thickness of the region A, the thickness of the second region is greater than the thickness of the region A. Thus, the ability of the electrolytic solution of the separator to retain the electrolytic solution is further enhanced, thereby improving the corresponding battery cycle performance.

In some implementations, in the edge region, a ratio of the thickness of the second region to the thickness of the first region ranges from 0.1 to 0.7, optionally, 0.2 to 0.5.

In some implementations, in the edge region, an area ratio of the second region to the first region ranges from 0 to 2.4, preferably, 0 to 1.

In some implementations, in the edge region, the second region and the first region may be arranged in a strip shape, or arranged in an irregular patch shape. The "strip shape" refers to a continuous disposition in one direction, a boundary line of which may be a straight line or an irregular curve.

In some implementations, when the second region and the first region may be arranged into the strip shape, a long edge of the strip may be parallel to the width direction of the separator (in this case, it is also called arranged in the width direction of the separator), or may be parallel to a length direction of the separator (in this case, it is also called arranged in the length direction of the separator), or tilts at an angle against a center line of the separator in the width direction.

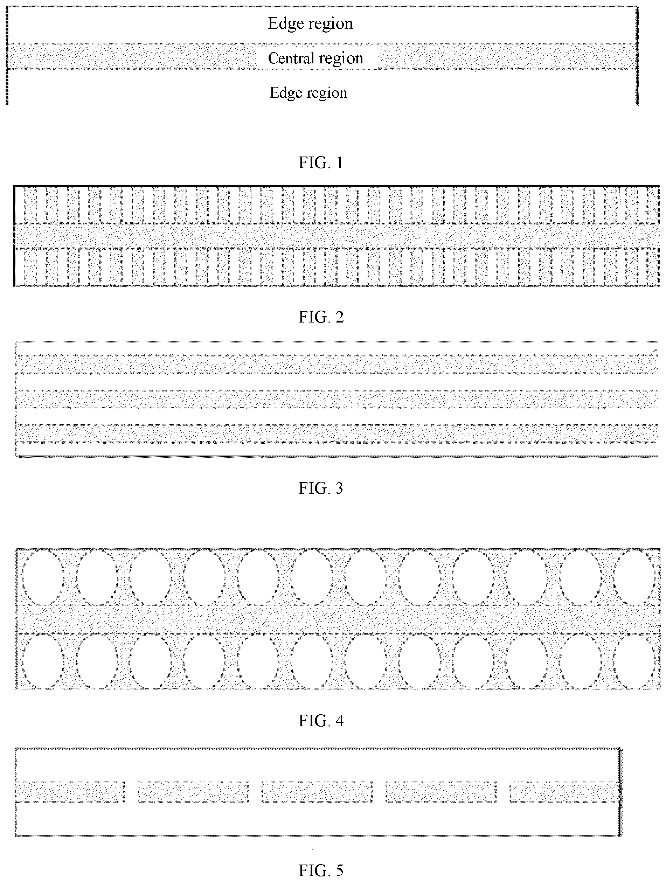

In a preferable implementation, in the edge region, the first region and the second region are alternated into a strip shape to be disposed in the width direction of the separator, as shown in FIG. 2. Thus, the ability of the electrolytic solution of the separator to retain the electrolytic solution is further enhanced, thereby improving the corresponding battery cycle performance.

In some implementations, in the edge region, when the second region and the first region may be arranged into the strip shape, a distance between the adjacent second region and first region ranges from 0.5 to 30 mm, preferably, 2 to 10 mm. In this application, the distance between the adjacent second region and first region is understood as a distance between center lines of the adjacent second region and first region in the width direction.

In some implementations, the coating includes at least one of an inorganic particle, an organic particle and a binder, and optionally, a dispersant. Thus, the ability of the electrolytic solution of the separator to retain the electrolytic solution is further enhanced, thereby improving the corresponding battery cycle performance.

In some implementations, the coating includes 89% to 97% of an organic/inorganic particle or a combination thereof, 0 to 2% of a dispersant, and 3% to 10% of a binder, where the contents are based on a mass of the coating. Thus, the ability of the electrolytic solution of the separator to retain the electrolytic solution is further enhanced, thereby improving the corresponding battery cycle performance.

In some implementations, the inorganic particle includes silicon dioxide (SiO₂), zirconium dioxide (ZrO₂), aluminum oxide (Al₂O₃), boehmite (γ-AlOOH), barium sulfate (BaSO₄), magnesium oxide (MgO), magnesium hydroxide (Mg(OH)₂), tin dioxide (SnO₂), a titanium oxide (TiO₂), calcium oxide (CaO), zinc oxide (ZnO), yttrium oxide (Y₂O₃), nickel oxide (NiO), cerium oxide (CeO₂), zirconium titanate (SrTiO₃), barium titanate (BaTiO₃), magnesium fluoride (MgF₂), or a combination thereof, and preferably, includes silicon oxide, zirconium oxide, aluminum oxide, boehmite, or a combination thereof. The inorganic particle has a content ranging from 89% to 97%, based on the mass of the coating. Thus, the ability of the electrolytic solution of the separator to retain the electrolytic solution is further enhanced, thereby improving the corresponding battery cycle performance.

In some implementations, the organic particle includes at least one of polymethacrylate, polyacrylate, polyvinylidene fluoride, polytetrafluoroethylene, poly(vinylidene fluoride-co-tetrafluoroethylene-co-propylene), poly(vinylidene fluoride-co-hexafluoropropylene-co-tetrafluoroethylene), poly(tetrafluoroethylene-co-hexafluoropropylene), and fluorinated acrylate resin, and preferably, includes polyvinylidene fluoride, polymethacrylate, or a combination thereof. The organic particle has a content ranging from 0% to 8%, based on the mass of the coating. Thus, the ability of the electrolytic solution of the separator to retain the electrolytic solution is further enhanced, thereby improving the corresponding battery cycle performance.

In some implementations, the binder is a commonly used material well known to a person skilled in the art. For example, the binder may include at least one of acrylate, styrene-butadiene rubber, polyacrylic acid, sodium polyacrylate, polyacrylamide, polyvinyl alcohol, sodium alginate, polymethacrylic acid, and carboxymethyl chitosan, and preferably, acrylate, polyacrylic acid, or a combination thereof. The binder has a content ranging from 3% to 10%.

In some implementations, the coating may further include a dispersant. The dispersant is a commonly used material known to a person skilled in the art, and includes, for example, at least one of sodium carboxymethylcellulose, sodium citrate, sodium edetate, sodium stearate, alkyl sodium sulfonate, sodium chloride, sodium hexametaphosphate, polyacrylamide, and ammonium polymethacrylate. The dispersant has a content ranging from 0% to 2%, preferably, 0.2% to 1%, based on the mass of the coating.

In a preferable implementation, the coating includes 92% to 95% of an inorganic particle, 0.2% to 1% of a dispersant, and 4% to 7% of a binder, based on the mass of the coating.

In some implementations, when the coating includes an inorganic particle and a binder, the separator is provided with an organic particle layer on a surface of a side of the coating away from a base film. Thus, the ability of the electrolytic solution of the separator to retain the electrolytic solution is further enhanced, thereby improving the corresponding battery cycle performance.

In some implementations, an organic particle of the organic particle layer has the same composition and performance as the foregoing organic particle, and includes, for example, at least one of polymethacrylate, polyacrylate, polyvinylidene fluoride, polytetrafluoroethylene, poly(vinylidene fluoride-co-tetrafluoroethylene-co-propylene), poly(vinylidene fluoride-co-hexafluoropropylene-co-tetrafluoroethylene), poly(tetrafluoroethylene-co-hexafluoropropylene), and fluorinated acrylate resin.

In some implementations, the base film may be at least one selected from polyethylene, polypropylene, polyolefin, a cellulose non-woven fabric diaphragm, a polyvinylidene fluoride porous film, and a polyimide electrostatically spun porous film. Thus, through the base film of a specific type, the ability of the electrolytic solution of the separator to retain the electrolytic solution is further enhanced, thereby improving the corresponding battery cycle performance.

A second aspect of this application further provides a secondary battery, characterized in that the secondary battery includes the separator according to the first aspect of this application.

Thus, the secondary battery has excellent cycle performance.

In some implementations, the secondary battery is a lithium-ion secondary battery or a sodium-ion secondary battery, optionally, a lithium-ion secondary battery.

A third aspect of this application further provides an electrical device, characterized in that the electrical device includes the secondary battery according to the second aspect of this application.

The following describes the secondary battery and the electrical device according to this application with due reference to the drawings.

Unless otherwise specified, the components, material types or contents of batteries referred to apply to both the lithium-ion secondary battery and the sodium-ion secondary battery.

In an implementation of this application, provided is a secondary battery.

Typically, the secondary battery includes a positive electrode plate, a negative electrode plate, an electrolyte and a separator. In the charging and discharging processes of the battery, active ions are intercalated and deintercalated between the positive electrode plate and the negative electrode plate back and forth. The electrolyte serves to conduct ions between the positive electrode plate and the negative electrode plate. The separator is disposed between the positive electrode plate and the negative electrode plate, and primarily serves to prevent a short circuit between a positive electrode and a negative electrode while allowing ions to pass through.

### Positive electrode plate

The positive electrode plate includes a positive current collector and a positive electrode film layer disposed on at least one surface of the positive current collector, and the positive electrode film layer includes a positive active material according to the first aspect of this application.

As an example, the positive current collector is provided with two opposite surfaces in a thickness direction of the positive current collector, and the positive electrode film layer is disposed on either or both of the two opposite surfaces of the positive current collector.

In some implementations, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by forming a metal material on the polymer material substrate. The metal material includes, but is not limited to, aluminum, aluminum alloy, nickel, nickel alloy, titanium, titanium alloy, silver, silver alloy, and the like. The polymer material substrate may be, for example, polypropylene (PP), polyethylene terephthalate (PET), polybutylene terephthalate (PBT), polystyrene (PS), or polyethylene (PE).

In some implementations, the positive active material may include a positive active material that is well known for use in a battery in the art.

As an example, the positive active material of the lithium-ion secondary battery may include at least one of the following materials: olivine-structured lithium-containing phosphate, lithium transition metal oxide, and a modified compound thereof. However, this application is not limited to such materials, and other conventional materials usable as a positive active material of a battery may further be used. Of such positive active materials, one may be used alone, or at least two may be used in combination. Examples of the lithium transition metal oxide may include, but are not limited to, at least one of lithium cobalt oxide (such as LiCoO₂), lithium nickel oxide (such as LiNiO₂), lithium manganese oxide (such as LiMnO₂, and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM₃₃₃), LiNi_{0.5}Co_{0.2}Mn_{0.3}O₂ (briefly referred to as NCM₅₂₃), LiNi_{0.5}Co_{0.25}Mn_{0.25}O₂ (briefly referred to as NCM₂₁₁), LiNi_{0.6}Co_{0.2}Mn_{0.2}O₂ (briefly referred to as NCM₆₂₂), LiNi_{0.8}Co_{0.1}Mn_{0.1}O₂ (briefly referred to as NCM₈₁₁), lithium nickel cobalt aluminum oxide (such as LiNi_{0.85}Co_{0.15}Al_{0.05}O₂), or a modified compound thereof. Examples of the olivine-structured lithium-containing phosphate may include, but are not limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

As an example, the positive active material of the sodium-ion secondary battery may include at least one of the following materials: at least one of sodium transition metal oxide, a polyanionic compound and a Prussian blue compound. However, this application is not limited to such materials, and other conventional well-known materials usable as a positive active material of a sodium-ion battery may further be used.

As an alternative technical solution of this application, in the sodium transition metal oxide, transition metal may be at least one of Mn, Fe, Ni, Co, Cr, Cu, Ti, Zn, V, Zr and Ce. The sodium transition metal oxide is for example NaₓMO₂, where M is one or more of Ti, V, Mn, Co, Ni, Fe, Cr and Cu, and 0 < x ≤ 1.

As an alternative technical solution of this application, the polyanionic compound may be a type of compounds having a sodium ion, a transition metal ion and a tetrahedral (YO₄)ⁿ⁻anion unit. The transition metal may be at least one of Mn, Fe, Ni, Co, Cr, Cu, Ti, Zn, V, Zr and Ce; Y may be at least one of P, S and Si; and n represents the valence of (YO₄)ⁿ⁻.

The polyanionic compound may further be a class of compounds having a sodium ion, a transition metal ion, a tetrahedral (YO₄)ⁿ⁻ anion unit, and a halogen anion. The transition metal may be at least one of Mn, Fe, Ni, Co, Cr, Cu, Ti, Zn, V, Zr and Ce; Y may be at least one of P, S and Si; n represents the valence of (YO₄)ⁿ⁻; and the halogen may be at least one of F, Cl and Br.

The polyanionic compound may further be a class of compounds having a sodium ion, a tetrahedral (YO₄)ⁿ⁻ anion unit, a polyhedral unit (ZO_{y})^{m+}, and an optional halogen anion. Y may be at least one of P, S and Si, and n represents the valence of (YO₄)ⁿ⁻; Z represents a transition metal which may be at least one of Mn, Fe, Ni, Co, Cr, Cu, Ti, Zn, V, Zr and Ce, m represents the valence of (ZO_{y})^{m+}; and the halogen may be at least one of F, Cl and Br.

The polyanionic compound is for example at least one of NaFePO₄, Na₃V₂(PO₄)₃ (vanadium sodium phosphate, briefly referred to as NVP), Na₄Fe₃(PO₄)₂(P₂O₇), NaM'PO₄F (M' is one or more of V, Fe, Mn and Ni) and Na₃(VO_{y})₂(PO₄)₂F_{3-2y} (0 ≤ y ≤ 1).

The Prussian blue compound may be a class of compounds having a sodium ion, a transition metal ion and a cyanide ion (CN). The transition metal may be at least one of Mn, Fe, Ni, Co, Cr, Cu, Ti, Zn, V, Zr and Ce. The Prussian blue compound is for example NaₐMe_{b}Me'_{c} (CN)₆, where Me and Me' are each independently at least one of Ni, Cu, Fe, Mn, Co, and Zn, 0 < a ≤ 2, 0 < b <1, and 0 < c <1.

A mass percentage of the positive active material in the positive electrode film layer ranges from 80wt% to 100wt%, based on a total mass of the positive electrode film layer.

In some implementations, the positive electrode film layer further optionally includes a binder. As an example, the binder may include at least one of polyvinylidene fluoride (PVDF), polytetrafluoroethylene (PTFE), poly(vinylidene fluoride-co-tetrafluoroethylene-co-propylene), poly(vinylidene fluoride-co-hexafluoropropylene-co-tetrafluoroethylene, poly(tetrafluoroethylene-co-hexafluoropropylene), and fluorinated acrylate resin. A mass percentage of the binder in the positive electrode film layer ranges from Owt% to 20wt%, based on the total mass of the positive electrode film layer.

In some implementations, the positive electrode film layer further optionally includes a conductive agent. As an example, the conductive agent may include at least one of superconducting carbon, acetylene black, carbon black, Ketjen black, carbon dots, carbon nanotubes, graphene and carbon nanofibers. A mass percentage of the conductive agent in the positive electrode film layer ranges from Owt% to 20wt%, based on the total mass of the positive electrode film layer.

In some implementations, the positive electrode plate may be prepared according to the following method: dispersing the foregoing ingredients for preparing the positive electrode plate such as the positive active material, the conductive agent, the binder, and any other ingredients into a solvent (such as N-methylpyrrolidone) to form a positive slurry, where the positive slurry has a solid content ranging from 40wt% to 80wt%, and the viscosity is adjusted to 5000 to 25000 mPa·s at a room temperature, coating a surface of a positive current collector with the positive slurry, drying the positive slurry on the current collector, and performing cold calendering by a cold calender to form a positive electrode plate. The positive power coated unit surface density ranges from 150 to 350 g/m², and the compacted density of the positive electrode plate ranges from 3.0 to 3.6 g/cm³, optionally, 3.3 to 3.5 g/cm³. A positive electrode diaphragm has a thickness ranging from 60 to 170 um.

The computational formula of the compacted density is
compacted density = coated surface density / (squeezed electrode plate thickness - current collector thickness).

A mass M of a positive active substance per unit area of the positive electrode diaphragm may be obtained by weighing through a standard balance.

A thickness T of the positive electrode diaphragm may be obtained by measuring through a ten-thousandth micrometer, and may be for example obtained by measuring through a ten-thousandth micrometer of model Mitutoyo293-100 with an accuracy of 0.1 µm. It is hereby noted that the thickness of the positive electrode diaphragm in the invention refers to a thickness of a positive electrode diaphragm in a positive electrode plate that is compacted through cold calendering and configured to assemble a battery.

### Negative electrode plate

The negative electrode plate includes a negative current collector and a negative electrode film layer disposed on at least one surface of the negative current collector, and the negative electrode film layer includes a negative active material.

As an example, the negative current collector is provided with two opposite surfaces in a thickness direction of the negative current collector, and the negative electrode film layer is disposed on either or both of the two opposite surfaces of the negative current collector.

In some implementations, the negative current collector may be a metal foil or a composite current collector. For example, as the metal foil, a copper foil may be used. The composite current collector may include a polymer material substrate and a metal layer formed on at least one surface of the polymer material substrate. The composite current collector may be formed by forming a metal material on the polymer material substrate. The metal material includes, but is not limited to, copper, copper alloy, nickel, nickel alloy, titanium, titanium alloy, silver, silver alloy, and the like. The polymer material substrate includes, but is not limited to, polypropylene (PP), polyethylene terephthalate (PET), polybutylene terephthalate (PBT), polystyrene (PS), polyethylene (PE), and the like.

In some implementations, the negative active material may be a negative active material well known for use in a battery in the art.

As an example, the negative active material of the lithium-ion secondary battery may include at least one of the following materials: artificial graphite, natural graphite, soft carbon, hard carbon, a silicon-based material, a tin-based material, lithium titanium oxide, and the like. The silicon-based material may be at least one selected from simple-substance silicon, a silicon-oxygen compound, a silicon-carbon composite, a silicon-nitrogen composite, and silicon alloy. The tin-based material may be at least one selected from simple-substance tin, tin-oxygen compound, or tin alloy. However, this application is not limited to such materials, and other conventional materials usable as a negative active material of a battery may further be used. Of such negative active materials, one may be used alone, or at least two may be used in combination.

As an example, the negative active material of the sodium-ion secondary battery is typically a hard carbon material, and a two-dimensional metal carbide or nitride. Preferably, the negative active material of the sodium-ion secondary battery is typically a hard carbon material.

A mass percentage of the negative active material in the negative electrode film layer ranges from 70wt% to 100wt%, based on a total mass of the negative electrode film layer.

In some implementations, the negative electrode film layer further optionally includes a binder. The binder may be at least one selected from styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). A mass percentage of the binder in the negative electrode film layer ranges from Owt% to 30wt%, based on the total mass of the negative electrode film layer.

In some implementations, the negative electrode film layer further optionally includes a conductive agent. The conductive agent may be at least one selected from superconductive carbon, acetylene black, carbon black, Ketjen black, carbon dots, carbon nanotubes, graphene, and carbon nanofibers. A mass percentage of the conductive agent in the negative electrode film layer ranges from Owt% to 20wt%, based on the total mass of the negative electrode film layer.

In some implementations, the negative electrode film layer further optionally includes other agents, such as a thickener (for example, sodium carboxymethyl cellulose (CMC-Na)). A mass percentage of the other agents in the negative electrode film layer ranges from Owt% to 15wt%, based on the total mass of the negative electrode film layer.

In some implementations, the negative electrode plate may be prepared according to the following method: dispersing the foregoing ingredients for preparing the negative electrode plate such as the negative active material, the conductive agent, the binder, and any other ingredients into a solvent (such as deionized water) to form a negative slurry, where the negative slurry has a solid content ranging from 30wt% to 70wt%, and the viscosity is adjusted to 2000 to 10000 mPa·s at a room temperature, coating a negative current collector with the obtained negative slurry, and performing a drying procedure, and cold calendering, such as double rollers, to obtain the negative electrode plate. The negative power coated unit surface density ranges from 75 to 270 g/m², and the compacted density of the negative electrode plate ranges from 1.2 to 2.0 g/cm³. A negative electrode diaphragm has a thickness ranging from 45 to 190 µm.

A mass M of a negative active substance per unit area of the negative electrode diaphragm may be obtained by weighing through a standard balance.

A thickness T of the negative electrode diaphragm may be obtained by measuring through a ten-thousandth micrometer, and may be for example obtained by measuring through a ten-thousandth micrometer of model Mitutoyo293-100 with an accuracy of 0.1 µm. It is hereby noted that the thickness of the negative electrode diaphragm in the invention refers to a thickness of a negative electrode diaphragm in a negative electrode plate that is compacted through cold calendering and configured to assemble a battery.

### Electrolyte

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some implementations, the electrolyte is an electrolytic solution. The electrolytic solution includes an electrolyte salt and a solvent.

In some implementations, the electrolyte salt of the lithium-ion secondary battery may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorophosphate (LiDFOB), lithium difluoro(oxalato)borate (LiBOB), lithium bis(oxalato)borate (LiPO₂F₂), lithium difluoro(bisoxalato)phosphate (LiDFOP), and lithium tetrafluoro(oxalato)phosphate (LiTFOP).

The electrolyte salt of the sodium-ion secondary battery may be one or more selected from sodium hexafluorophosphate, sodium bisfluorosulfonimide, sodium bistrifluoromethanesulfonimide, sodium trifluoromethanesulfonate, sodium tetrafluoroborate, sodium difluorophosphate, sodium perchlorate, and sodium chloride.

The electrolyte salt typically has a concentration ranging from 0.5 to 5 mol/L.

In some implementations, the solvent may be one or more selected from fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and (ethylsulfonyl)ethane (ESE).

In some implementations, the electrolytic solution further optionally includes an additive. For example, the additive may include a negative film-forming additive and a positive film-forming additive. The additive may further include an additive capable of improving specified performance of the battery, for example, an additive for improving overcharge performance of the battery, or an additive for improving high- or low-temperature performance of the battery.

### Separator

In some implementations, the secondary battery further includes a separator. The separator is the separator as described above.

In some implementations, the separator may be a single-layer film, and may also be a multilayer composite film, without being particularly limited. When the separator is the multilayer composite film, materials of layers of base films may be the same or different, without being particularly limited.

In some implementations, the separator has a thickness ranging from 5 to 20 µm, optionally, 7 to 16 µm.

In some implementations, the weight of a single-sided coating on the separator per unit area ranges from 1 to 6 g/m²; and optionally, the weight of the single-sided coating on the separator per unit area ranges from 2 to 4 g/m².

A coating weight per unit area M may be obtained by weighing through a standard balance.

In some implementations, the separator has a pore diameter ranging from 0.03 to 1 µm and has a porosity ranging from 30% to 60%.

In some implementations, the separator may have an air permeability ranging from 100 s/100 mL to 500 s/100 mL; and optionally, the separator may have an air permeability ranging from 150 s/100 mL to 400 s/100 mL, which is tested under the national standard GB/T 36363-2018. The porosity of the separator may be obtained through a gas replacement method, and porosity P = (V1 - V2) / V1 × 100%, where V1 represents an apparent volume of the separator, and V2 represents a true volume of the separator.

Thicknesses T of the separator and the coating thereof may be obtained by measuring through a ten-thousandth micrometer, and may be for example obtained by measuring through a ten-thousandth micrometer of model Mitutoyo293-100 with an accuracy of 0.1 µm.

In some implementations, the positive electrode plate, the negative electrode plate and the separator may be made into an electrode assembly through a winding process or a stacking process.

In some implementations, the secondary battery may include an outer package. The outer package may be configured to package the foregoing electrode assembly and the electrolyte.

In some implementations, the outer package of the secondary battery may be a hard shell such as a hard plastic shell, an aluminum shell, a steel shell, or the like. The outer package of the secondary battery may also be a soft package such as a pouch-type soft package. The soft package may be made of plastic such as polypropylene, polybutylene terephthalate, or polybutylene succinate.

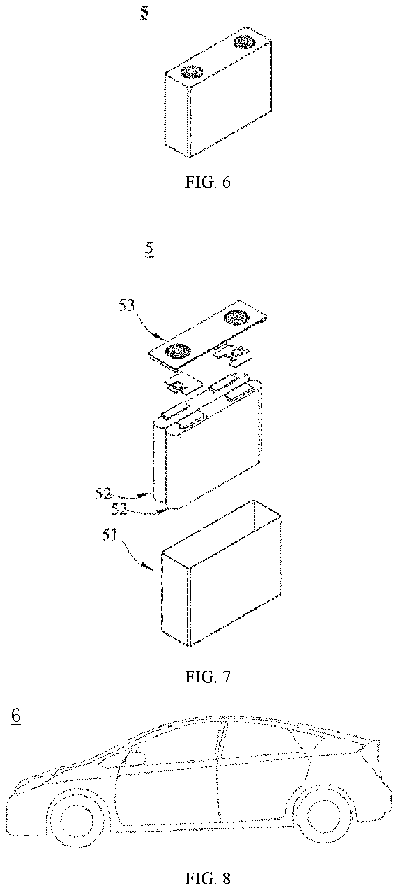

The shape of the secondary battery is not particularly limited in this application, and may be cylindrical, prismatic or any other shape. For example, FIG. 6 is a secondary battery 5 of a prismatic structure as an example.

In some implementations, referring to FIG. 7, the outer package may include a shell 51 and a cover plate 53. The shell 51 may include a bottom plate and side plates connected to the bottom plate, and an accommodating cavity is enclosed by the bottom plate and the side plates. The shell 51 is provided with an opening communicating with the accommodating cavity, and the cover plate 53 may cover the opening to close the accommodating cavity. A positive electrode plate, a negative electrode plate and a separator may form an electrode assembly 52 through a winding process or a stacking process. The electrode assembly 52 is packaged in the accommodating cavity. The electrode assembly 52 is infiltrated with an electrolytic solution. There may be one or more electrode assemblies 52 in the secondary battery 5, which may be selected by a person skilled in the art according to specific practical needs.

In some implementations, the secondary battery 5 may be assembled into a battery module, there may be one or more secondary batteries 5 in the battery module, and the specific number may be selected by a person skilled in the art according to the application and capacity of the battery module.

In the battery module, a plurality of secondary batteries 5 may be sequentially arrayed in a length direction of the battery module. Certainly, the plurality of secondary batteries 5 may also be laid out in any other manners. Further, the plurality of secondary batteries 5 may be fixed through a fastener.

Optionally, the battery module may further include a housing with an accommodating space, and the plurality of secondary batteries 5 are accommodated in the accommodating space.

In some implementations, the foregoing battery module may further be assembled into a battery pack, there may be one or more battery modules in the battery pack, and the specific number may be selected by a person skilled in the art according to the application and capacity of the battery pack.

The battery pack may include a battery box and a plurality of battery modules disposed in the battery box. The battery box includes an upper box body and a lower box body, and the upper box body may cover the lower box body to form a closed space for accommodating the battery modules. The plurality of battery modules may be laid out in the battery box in any other manners.

Additionally, this application further provides an electrical device. The electrical device includes at least one of the secondary battery, the battery module or the battery pack provided by this application. The secondary battery, the battery module and the battery pack may be used as a power supply of the electrical device, and may also be used as an energy storage unit of the electrical device. The electrical device may include, but not limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship and a satellite, an energy storage system, or the like.

As the electrical device, the secondary battery, the battery module or the battery pack may be selected according to the use needs of the electrical device.

FIG. 8 is an electrical device as an example. The electrical device is a battery electric vehicle, a hybrid electric vehicle, a plug-in hybrid electric vehicle, or the like. In order to meet the needs of the electrical device for high power and high energy density of a secondary battery, a battery pack or a battery module may be used.

As another example, a device may be a mobile phone, a tablet computer, a laptop computer, or the like. The device is typically required to be thin and light, and may use the secondary battery as a power supply.

### Embodiment

In order to make the technical problems-to-be-solved, technical solutions and beneficial effects of this application clearer, a further detailed description of this application will be made in conjunction with the embodiments and the drawings. Evidently, the described embodiments are only a few, but not all embodiments of the present application. The following description of the at least one exemplary embodiment is in fact merely illustrative and in no way serves as any limitation on this application and an application thereof. All other embodiments obtained by a person of ordinary skill in the art on the basis of the embodiments of tis application fall within the scope of protection of this application.

Where specific technologies or conditions are not indicated in the embodiments, follow technologies or conditions described in documents in the art or a product specification. Reagents or instruments used without indication of manufacturers are conventional products that are commercially available.

### I. Preparation Embodiments

### 1. Preparation of separator

Preparation Embodiment 1
(1) providing a base film made of polyethylene, with a thickness of 7 um, a width of 83.5 mm, a length of 10000 mm, and a porosity of 37%.
(2) preparing a coating slurry
   mixing sodium carboxymethylcellulose, boehmite and acrylate at 0.5: 94: 5.5%, with a total mass of m0 g, and adding 1.38*m0 g of water to prepare the slurry with a solid content of 42%.
(3) coating a coating with a pattern in FIG. 1
   coating the base film with the coating using gravure coating equipment, and using a specially designed gravure roller to coat the coating with the pattern shown in FIG. 1. A central region has a thickness of 1.5 um, and an edge region has a thickness of 3 um.

Preparation Embodiment 2: preparing a coating in a form of FIG. 2
repeating steps in Preparation Embodiment 1, except that in step (3), the design of the gravure roller is further improved, and the coating is coated with a pattern shown in FIG. 2. A central region has a thickness of 1.5 um, and an edge region has a first region thickness of 3 um and a second region thickness of 1.5 um.

Preparation Embodiment 3: preparing a coating in a form of FIG. 3
repeating steps in Preparation Embodiment 1, except that in step (3), the design of the gravure roller is further improved, and the coating is coated with a pattern shown in FIG. 3. A central region has a thickness of 1.5 um, and an edge has a first region thickness of 3 um and a second region thickness of 1.5 um.

Preparation Embodiment 4: preparing a patched-shaped coating of a first region in an edge region
repeating steps in Preparation Embodiment 1, except that in step (3), the design of the gravure roller is further improved, and the coating is coated with a pattern shown in FIG. 4. A middle region has a thickness of 1.5 um, and an edge region has a first region thickness of 3 um and a second region thickness of 1.5 um.

Preparation Embodiment 5: changing a thickness of a first region or a second region
repeating steps in Preparation Embodiment 2, except that in step (3), in a prepared coating, a middle region has a thickness of 2 um, and an edge has a first region thickness of 3 um and a second region thickness of 2 um.

Preparation Embodiment 6: changing a thickness of a first region or a second region
repeating steps in Preparation Embodiment 2, except that in step (3), in a prepared coating, a middle region has a thickness of 1.5 um, and an edge has a first region thickness of 4 um and a second region thickness of 1.5 um.

Preparation Embodiment 7: a thickness of a second region being different from that of a central region
repeating steps in Preparation Embodiment 2, except that in step (3), in a prepared coating, a middle region has a thickness of 1.5 um, and an edge has a first region thickness of 4 um and a second region thickness of 2 um.

Preparation Embodiment 8: adding an organic particle into a coating
repeating steps in Preparation Embodiment 2, except that in step (2), during preparation of a slurry, mixing sodium carboxymethylcellulose, boehmite, polymethacrylate and acrylate at 0.5%: 91%: 3%: 5.5%, with a total mass of m0 g, and adding 1.38*m0 g of water to prepare the slurry with a solid content of 42%.

Preparation Embodiment 9: additionally coating the coating with an organic particle layer
repeating steps in Preparation Embodiment 2, except that after step (3), mixing polyvinylidene fluoride and polyacrylonitrile at a ratio of 9: 1, and spraying an aqueous solution with a solid content of 12% on a separator, with a coating weight of 0.5 g/m².

Preparation Embodiment 10: a central region including a coating of varying thickness
repeating steps in Preparation Embodiment 1, except that in step (3), the design of the gravure roller is further improved, depths and densities of surface meshes or protruding points of the central region laid out at intervals are not consistent in a circumferential direction of the gravure roller, and the coating is coated with a pattern shown in FIG. 5. The central region has a region A thickness of 1.5 um, with a percentage of 90%, and a region B thickness of 3 um, with a percentage of 10%.

Preparation Comparative Embodiment 1: a thickness of a whole coating being the same as that of a central region
repeating steps in Preparation Embodiment 1, except that in step (3), the gravure roller used has consistent depths and densities of surface meshes or protruding points. The coating has a thickness of 1.5 um.

Preparation Comparative Embodiment 2: a thickness of a whole coating being the same as that of a first region
repeating steps in Preparation Embodiment 1, except that in step (3), the gravure roller used has consistent depths and densities of surface meshes or protruding points. The coating has a thickness of 3 um.

Preparation Comparative Embodiment 3: a whole coating having strip-shaped second regions and first regions alternating with each other
repeating steps in Preparation Embodiment 2, except that in step (3), a central region is not coated.

Preparation Comparative Embodiment 4: a thickness of a central region being greater than that of an edge region
repeating steps in Preparation Embodiment 1, except that in step (3), the central region has a thickness of 3 um, and the edge region has a thickness of 1.5 um.

### 2. Performance test of separator

### Porosity

A separator-to-be-tested is cut into a prismatic sample of certain length and width dimensions. An apparent volume V1 of the sample is measured and calculated, V1 = S × d (where S represents a separator area in a unit of cm²; d represents a separator thickness in a unit of cm, the separator thickness is tested using MAHR Milimar C1216, and a most first region is necessarily tested).

Using AccuPyc II 1340 Pycnometer, with reference to a porosity test method in GB/T 24586-2009, through a helium displacement method in combination with Archimedes' principle and N·Bohr's Law (PV = nRT), a true volume V2 of a tested material is accurately measured in a unit of cm³. A total porosity of the separator is calculated through a formula Q = (V1 - V2)/V1 × 100%.

For details of different product parameters of separators in Preparation Embodiments 1 to 10 and separators in Preparation Comparative Embodiments 1 to 4, see Table 1.

**Table 1 Different product parameters of separators in Preparation Embodiments 1 to 10 and separators in Preparation Comparative Embodiments 1 to 4**

| Number | First region thickn ess | Secon d region thickn ess | Regio n A thickn ess | Regio n B thickn ess | Area percent age of first region¹ | Area percent age of second region | Area percent age of region A² | Area percent age of region B | Separ ator porosi ty |
|---|---|---|---|---|---|---|---|---|---|
| 1 | 3 | 3 | 1.5 | / | 80% | 0% | 20% | 0 | 47.8% |
| 2 | 3 | 1.5 | 1.5 | / | 40% | 40% | 20% | 0 | 49.6% |
| 3 | 3 | 1.5 | 1.5 | / | 40% | 40% | 20% | 0 | 49.6% |
| 4 | 3 | 1.5 | 1.5 | / | 40% | 40% | 20% | 0 | 49.6% |
| 5 | 3 | 2 | 2 | / | 40% | 40% | 20% | 0 | 48.7% |
| 6 | 4 | 1.5 | 1.5 | / | 40% | 40% | 20% | 0 | 53.1% |
| 7 | 4 | 2 | 1.5 | / | 40% | 40% | 20% | 0 | 52.5% |
| 8 | 3 | 1.5 | 1.5 | / | 40% | 40% | 20% | 0 | 49.6% |
| 9 | 3 | 1.5 | 1.5 | / | 40% | 40% | 20% | 0 | 49.6% |
| 10 | 3 | 3 | 1.5 | 3 | 80% | 0% | 18% | 2% | 47.7% |
| Compar ative 1 | 1.5 | 1.5 | 1.5 | / | / | / | 100% | 0 | 42.8% |
| Compar ative 2 | 3 | 3 | 3 | / | 100% | 0% | / | / | 46.9% |
| Compar ative 3 | 3 | 1.5 | / | / | 50% | 50% | / | / | 49.2% |
| Compar ative 4 | 1.5 | 1.5 | 3 | / | 80% | 0% | 20% | 0 | 50.5% |

| | | | | | | | | | |
|---|---|---|---|---|---|---|---|---|---|
| Both ¹ and ² are based on an area of a coating. | | | | | | | | | |

### II. Application Embodiments

### Embodiment 1

### 1) Preparing a positive electrode plate

Dispersing lithium iron phosphate as a positive active material, SP as a conductive carbon black, and PVDF as a binder at a mass ratio of 98: 1: 1 into NMP as a solvent for even mixing to obtain a positive slurry; coating an aluminum foil of a positive current collector with the positive slurry evenly, and performing drying and cold calendering to obtain the positive electrode plate, in which a coating weight per unit area of the positive electrode plate is 0.4 g/1540.25 mm².

### 2) Preparing a negative electrode plate

Mixing graphite as a negative active material, sodium carboxymethylcellulose as a thickener, styrene-butadiene rubber as a binder, and acetylene black as a conductive agent at a mass ratio of 97: 1: 1: 1, adding deionized water, and stirring the mixture well with a vacuum mixer to obtain a negative slurry, coating a copper foil with the negative slurry evenly; airdrying the copper foil at a room temperature and transferring the copper foil into a 120°C oven for drying for 1 h, and subsequently performing cold calendering and slitting to obtain the negative electrode plate, in which a coating weight per unit area of the negative electrode plate is 0.18 g/1540.25 mm².

### 3) Separator

Using a separator in Preparation Embodiment 1.

### 4) Preparing an electrolytic solution

An organic solvent is a mixed solution containing ethylene carbonate (EC), ethyl methyl carbonate (EMC) and diethyl carbonate (DEC), in which a volume ratio of EC to EMC to DEC is 20: 20: 60. In an argon atmosphere glove box with a water content < 10 ppm, a fully dried lithium salt LiPF6 is dissolved in the organic solvent for even mixing to obtain the electrolytic solution. The lithium salt has a concentration of 1 mol/L.

### 5) Preparing a battery

Aligning, stacking and tightly attaching a positive electrode plate, a separator and a negative electrode plate in sequence in such a way that the separator is located between the positive and negative electrode plates to serve a function of separation, and winding the stacked structure into a prismatic bare battery cell. Assembling the bare battery cell into a shell, baking the shell at a high temperature to remove water, and injecting 55 g of an electrolytic solution. Performing standing and infiltrating, chemical formation, high-temperature standing, and capacity to obtain a secondary battery with a capacity of 30 Ah.

Secondary batteries in Embodiments 2 to 10 and secondary batteries in Comparative Embodiments 1 to 4 are prepared through a method similar to a secondary battery in Embodiment 1, except that separators in the corresponding preparation embodiments are used.

### Comparative Embodiment 5

Repeating steps in Embodiment 1, except that a base film in Preparation Embodiment 1 is used as a separator.

### III. Battery performance test

### Cycle performance test

At a room temperature, charging a battery at a constant current of 0.5 C to 3.65 V, and continuing to charge the battery at a constant voltage until a charging current is less than 0.05 C; pausing for 5 min; discharging at a constant current of 0.5 C to 2.5 V; and pausing for 5 min. The above is a charge and discharge cycle of the battery, which is repeated until the capacity of the battery fades to 80% of an initial value, and the number of cycles is recorded.

### Test results of Embodiments and Comparative Embodiments

According to the foregoing methods, batteries in Embodiments and Comparative Embodiments are prepared respectively, and performance parameters are measured. The results are shown in Table 2 below.

**Table 2 Performance parameters of batteries in Embodiments and Comparative Embodiments**

| Number | Separator features | Number of cycles |
|---|---|---|
| 1 | a central region only includes a region A, and an edge region only includes a first region | 3000 |
| 2 | a region A having a thickness of 1.5 um serves as a central region, and a strip-shaped first region (3 um) and second region (1.5 um) that are alternated with a long edge parallel to a width direction of a separator serve as an edge region | 3500 |
| 3 | A region A serves as a central region, and a strip-shaped first region and second region that are transversely laid out and alternately disposed serve as an edge region | 3200 |
| 4 | A region A serves as a central region, and an edge region includes a dotted first region | 3200 |
| 5 | A region A having a thickness of 2 um serves as a central region, and an edge region includes a strip-shaped first region (3 um) and second region (2 um) that are alternated with a long edge parallel to a width direction of a separator | 3200 |
| 6 | A region A having a thickness of 1.5 um serves as a central region, and an edge region includes a strip-shaped first region (4 um) and second region (1.5 um) that are alternated with a long edge parallel to a width direction of a separator | 3600 |
| 7 | A region A having a thickness of 1.5 um serves as a central region, and an edge region includes a strip-shaped first region (4 um) and second region (2 um) that are alternated with a long edge parallel to a width direction of a separator | 3600 |
| 8 | An organic particle is added into a coating in Embodiment 2 | 3600 |
| 9 | A coating in Embodiment 2 is coated with an organic particle layer | 3600 |
| 10 | A central region includes a region A having a thickness of 1.5 um and a region B having a thickness of 3 um | 3000 |
| Comparative 1 | Whole coating of 1.5 um | 2000 |
| Comparative 2 | Whole coating of 3 um | 2200 |
| Comparative 3 | No central region | 2800 |
| Comparative 4 | A central region has a thickness of 3 um, and an edge region has a thickness of 1.5 um | 1800 |

As can be seen from the foregoing Embodiments and Comparative Embodiments, the separator of this application has excellent technical effects, and has a coating of a specific structure, which enhances the ability of the electrolytic solution of the separator to retain the electrolytic solution, thereby improving the corresponding battery cycle performance. For example, for the battery in Embodiment 6 of this application, when the capacity fades to 80% of the initial value, the number of cycles reaches 3600, compared with the battery in Comparative Embodiment 1 (the number of cycles is 2000), the cycle performance of the battery in Embodiment 6 of this application is enhanced by 80%.

It is hereby noted that this application is not limited to the foregoing implementations. The foregoing implementations are merely examples. Any and all implementations with substantively the same constituents or exerting the same effects as the technical ideas hereof without departing from the scope of the technical solutions of this application still fall within the technical scope of this application. In addition, all kinds of variations of the implementations conceivable by a person skilled in the art and any other implementations derived by combining some constituents of the implementations hereof without departing from the scope of the subject-matter of this application still fall within the scope of this application.

## Claims

1. A separator, comprising a base film and a coating disposed on a surface of at least one side of the base film,
the coating comprising a central region disposed in a length direction of the base film with a center line of the base film in a width direction as a center line, and an edge region disposed outside the central region,
the central region comprising a region A having a coating thickness of D1, the edge region comprising a first region having a thickness of D0, and D1 < D0.

2. The separator according to claim 1, **characterized in that** a ratio of D1 to D0 ranges from 0.1 to 0.7.

3. The separator according to claim 1 or 2, **characterized in that** in the central region, the region A has an area percentage ranging from 70% to 100%, based on an area of the central region.

4. The separator according to any one of claims 1 to 3, **characterized in that** the central region is composed of the region A.

5. The separator according to any one of claims 1 to 4, **characterized in that** the central region has a coating area percentage ranging from 10% to 70%, based on an area of the coating.

6. The separator according to any one of claims 1 to 5, **characterized in that** the edge region has a coating area percentage ranging from 30% to 90%, based on the area of the coating.

7. The separator according to any one of claims 1 to 6, **characterized in that** the first region has a coating area accounting for 30% to 100% of the edge region.

8. The separator according to any one of claims 1 to 7, **characterized in that** the edge region comprises a first region having a thickness of D0 and a second region having a thickness of less than D0, the thickness of the second region being same as or different from the thickness of the region A.

9. The separator according to claim 8, **characterized in that** the thickness of the second region is the same as the thickness of the region A.

10. The separator according to claim 8, **characterized in that** in a case that the thickness of the second region is different from the thickness of the region A, the thickness of the second region is greater than the thickness of the region A.

11. The separator according to any one of claims 8 to 10, **characterized in that** in the edge region, the first region and the second region are alternated into a strip shape, and a strip-shaped long edge is disposed parallel to a width direction of the separator.

12. The separator according to any one of claims 1 to 11, **characterized in that** the coating comprises at least one of an inorganic particle, an organic particle and a binder.

13. A secondary battery, **characterized in that** the secondary battery comprises the separator according to any one of claims 1 to 12.

14. An electrical device, **characterized in that** the electrical device comprises the secondary battery according to claim 13.
